# EUROPÄISCHE PATENTSCHRIFT

(11) **EP 1 443 251 B1**
(45) Veröffentlichungstag und Bekanntmachung des Hinweises auf die Patenterteilung: **09.11.2005**
(21) Anmeldenummer: 03104625.3
(22) Anmeldetag: 10.12.2003
(51) Int. Cl.: F16J 15/06, F16L 23/16, F16B 5/06, F01N 7/18

(54) **Flanscheinheit**
Flange assembly
Dispositif de bride

(30) Priorität: 03.02.2003 DE 10304279
(43) Veröffentlichungstag der Anmeldung: 04.08.2004
(73) Patentinhaber: SIEMENS AKTIENGESELLSCHAFT, 80333 München (DE)
(72) Erfinder: Beil, Egon, 61197 Florstadt (DE); Weis, Christian, 55120 Mainz (DE)

(56) Entgegenhaltungen:
- DE-A- 19 652 020
- US-A- 5 524 906
- US-A- 5 984 318
- US-B1- 6 318 731

## Beschreibung

Die Erfindung bezieht sich auf eine Flanscheinheit. Flanscheinheiten sind bekannt. Sie bestehen in der Regel aus dem Flansch und einer an der Anschlussseite des Flansches angeordneten Dichtung zur Abdichtung zwischen Flansch und der am Flansch angeordneten Vorrichtung. Für den Transport der Flanscheinheit werden dabei in der Regel an der Dichtung Klipse vorgesehen, die den Flansch umgreifen und die Dichtung somit am Flansch festhalten. Dabei ist nachteilig, dass eine Verletzungsgefahr durch die außen überstehenden Klipse vorhanden ist.

Eine Flanscheinheit mit den Merkmalen des Oberbegriffs des Anspruches 1 ist aus der US 5,984,318 bekannt. Dort kann das Eingreifen erschwert sein. Andere Flanscheinheiten, bei denen eine Fixierung der Dichtung in Löchern erfolgt, sind aus den US 6,318,731 B1 und der DE 196 52 020 A1 bekannt.

Der Erfindung liegt daher die Aufgabe zugrunde, eine Flanscheinheit zu schaffen, bei der die Anordnung der Dichtung am Flansch vereinfacht ist.

Die der Erfindung zugrunde liegende Aufgabe wird durch eine Flanscheinheit mit den Merkmalen des Anspruches 1 gelöst, die aus einem Flansch und einer Dichtung besteht, bei der der Flansch an seiner, der Dichtung zugewandten Anschlussseite mindestens eine Vertiefung aufweist, deren Längsachse parallel zur Längsachse des Flansches verläuft, und bei der die Dichtung mindestens eine, rechtwinklig, parallel zur Längsachse des Flansches abgebogene Lasche aufweist, die jeweils in eine Vertiefung eingreift und einseitig an einer Wand dieser Vertiefung anliegt, wobei die Lasche einen Teilbereich aufweist, der in Richtung der der einen Wand gegenüberliegenden anderen Wand abgebogen ist und an der anderen Wand unter Biegespannung anliegt und bei welcher weiterhin die eine Wand und die andere Wand zueinander konisch verlaufen. Unter der Dichtung ist beispielsweise eine Flachdichtung zu verstehen, die aus einer Gummimischung oder aus einem Metall bestehen kann. Die jeweilige Vertiefung im Flansch ist beispielsweise als Langloch ausgebildet. In der Regel werden zwei oder drei Vertiefungen vorgesehen. Es hat sich in überraschender Weise gezeigt, dass zum einen eine Verletzungsgefahr vermieden und zum anderen die Anordnung der Dichtung am Flansch durch ein leichteres Eingreifen der jeweiligen Lasche in die zugehörige Vertiefung des Flansches vereinfacht werden kann, sofern die jeweilige Lasche in eine Vertiefung des Flansches eingreift und unter Biegespannung fixiert wird. Ein Lösen der Dichtung beim Transport oder bei der Endmontage kann dabei gleichzeitig vermieden werden.

Nach einer bevorzugten Ausgestaltung der Erfindung ist vorgesehen, dass die eine Wand der jeweiligen Vertiefung näher an der Mitte des Flansches als die andere Wand angeordnet ist. Die dadurch bedingte, näher an der Mitte des Flansches positionierte Anordnung der Laschen ermöglicht in vorteilhafter Weise eine weitgehend zentrale Fixierung der Dichtung am Flansch.

Gemäß einer weiteren bevorzugten Ausgestaltung der Erfindung ist der Teilbereich mittig in der Lasche angeordnet. Auf diese Weise lässt sich die Dichtung besonders vorteilhaft am Flansch fixieren, wobei ein Verklemmen weitgehend vermieden wird.

Die Erfindung wird nachfolgend anhand der Zeichnung (Fig. 1 bis Fig. 4) näher und beispielhaft erläutert.
- Fig. 1: zeigt den Flansch und die Dichtung der Flanscheinheit dreidimensional in Form einer Explosionszeichnung.
- Fig. 2: zeigt den Flansch und die Dichtung der Flanscheinheit dreidimensional gemäß dem Detail A in Fig. 1.
- Fig. 3: zeigt einen Teil der Flanscheinheit im Querschnitt in vereinfachter Form mit der Lasche, der Dichtung und der Vertiefung des Flansches.
- Fig. 4: zeigt eine Flanscheinheit nach dem Stand der Technik mit den umgreifenden Klipsen der Dichtung in vereinfachter, dreidimensionaler Form.

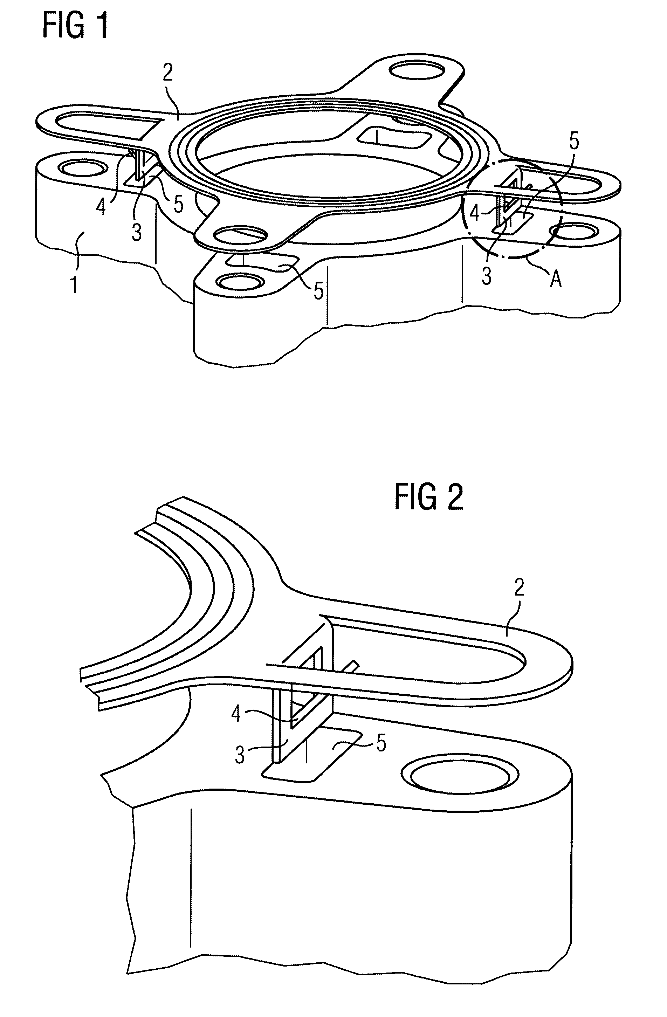

In Fig. 1 ist die Flanscheinheit dreidimensional in vereinfachter Form mit Flansch 1 und Dichtung 2 in Form einer Explosionszeichnung dargestellt. Der Flansch 1 weist an seiner, der Dichtung 2 zugewandten Anschlussseite Vertiefungen 5 auf, deren jeweilige Längsachse parallel zur Längsachse des Flansches 1 verlaufen. Die Dichtung 2 weist rechtwinklig, parallel zur Längsachse des Flansches 1 abgebogene Laschen 3 auf, die jeweils in die Vertiefung 5 eingreifen, sofern die Dichtung 2 am Flansch 1 anliegt. Die Laschen 3 liegen einseitig an einer Wand der Vertiefung 5 an und weisen jeweils einen Teilbereich 4 auf, der in Richtung der jeweils gegenüberliegenden anderen Wand abgebogen ist und jeweils unter Biegespannung anliegt.

In Fig. 2 ist ein Teil der Flanscheinheit dreidimensional in Form der Explosionszeichnung gemäß Detail A in Fig. 1 dargestellt. Der Teilbereich 4 der Lasche 3 ist mittig in der Lasche 3 angeordnet.

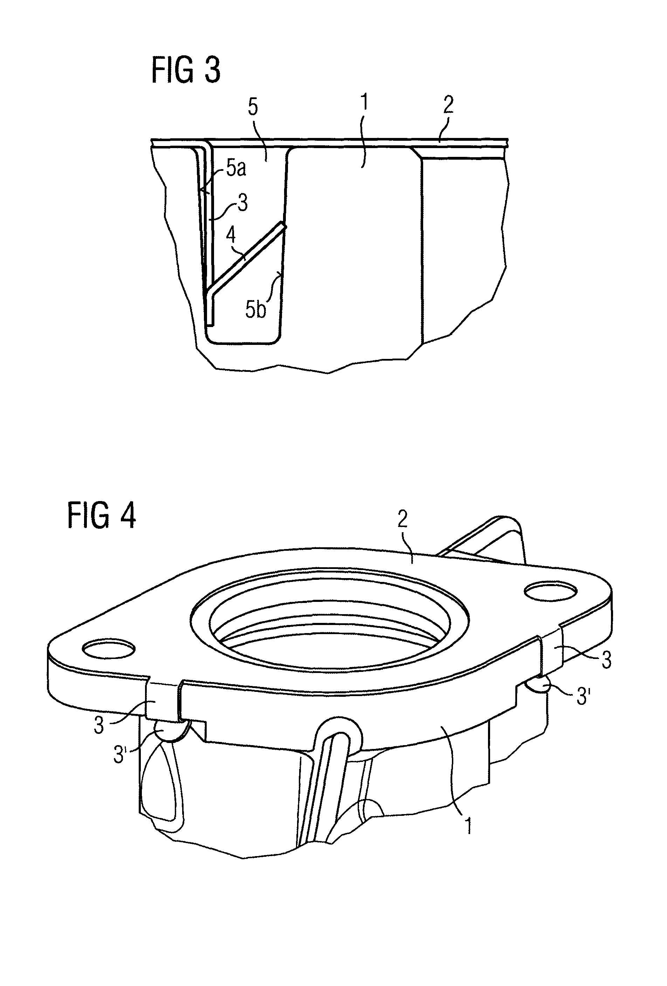

In Fig. 3 ist ein Teil der Flanscheinheit im Querschnitt schematisch vereinfacht dargestellt. Die Dichtung 2 weist eine, rechtwinklig, parallel zur Längsachse des Flansches 1 abgebogenen Lasche 3 auf, die in die Vertiefung 5 des Flansches 1 eingreift und einseitig an einer Wand 5a dieser Vertiefung 5 anliegt, wobei die Lasche 3 einen Teilbereich 4 aufweist, der in Richtung der der einen Wand 5a gegenüberliegenden anderen Wand 5b abgebogen ist und an der anderen Wand 5b unter Biegespannung anliegt. Die Vertiefung 5 ist als Langloch ausgebildet, bei dem die eine Wand 5a und die andere Wand 5b zueinander konisch verlaufen. Dieser konische Verlauf vereinfacht das Einführen der Lasche 3 in die Vertiefung 5 und ermöglicht gleichzeitig eine Fixierung der Dichtung 2 am Flansch 1. Dabei ist vorteilhaft, dass eine Verletzungsgefahr durch die Laschen 3, bzw. durch den Teilbereich 4 durch die Anordnung in der Vertiefung 5 des Flansches 1 vermieden wird.

In Fig. 4 ist eine Flanscheinheit dreidimensional dargestellt, die dem Stand der Technik entspricht. Dabei ist vorgesehen, dass die Dichtung 2 an der jeweiligen Lasche 3 einen Klip 3' aufweist, der den Flansch 1 umgreift und so die Dichtung 2 am Flansch 1 fixiert. Durch den überstehenden Klip 3' ist jedoch in nachteiliger Weise eine Verletzungsgefahr gegeben, die sich besonders nachteilig beim Transport oder bei der Endmontage auswirkt.

## Patentansprüche

1. Flanscheinheit, die aus einem Flansch (1) und einer Dichtung (2) besteht, bei der der Flansch (1) an seiner der Dichtung (2) zugewandten Anschlussseite mindestens eine Vertiefung (5) aufweist, deren Längsachse parallel zur Längsachse des Flansches (1) verläuft, und bei der die Dichtung (2) mindestens eine, rechtwinklig, parallel zur Längsachse des Flansches (1) abgebogene Lasche (3) aufweist, die jeweils in die Vertiefung (5) eingreift und einseitig an einer Wand (5a) dieser Vertiefung (5) anliegt, wobei die Lasche (3) einen Teilbereich (4) aufweist, der in Richtung der der einen Wand (5a) gegenüberliegenden anderen Wand (5b) abgebogen ist und an der anderen Wand (5b) unter Biegespannung anliegt, **dadurch gekennzeichnet, dass** die eine Wand (5a) und die andere Wand (5b) zueinander konisch verlaufen.

2. Flanscheinheit nach Anspruch 1, bei der die eine Wand (5a) der jeweiligen Vertiefung (5) näher an der Mitte des Flansches (1) als die andere Wand (5b) angeordnet ist.

3. Flanscheinheit nach Anspruch 1 oder Anspruch 2, bei der der Teilbereich (4) mittig in der Lasche (3) angeordnet ist.

4. Flanscheinheit nach einem der Ansprüche 1 bis 3, bei der die wenigstens eine Vertiefung als Langloch (5) ausgebildet ist.

## Claims

1. Flange unit which comprises a flange (1) and a seal (2), in which flange unit the flange (1) has at least one depression (5) on its connecting side which faces the seal (2), the longitudinal axis of the said depression (5) extending parallel to the longitudinal axis of the flange (1), and in which flange unit the seal (2) has at least one bracket (3) which is bent away at right angles parallel to the longitudinal axis of the flange (1), engages in each case in the depression (5) and is in contact with one wall (5a) of the said depression (5) on one side, the bracket (3) having a part region (4) which is bent away in the direction of the other wall (5b), which lies opposite the one wall (5a), and is in contact with the other wall (5b) under flexural stress, **characterized in that** the one wall (5a) and the other wall (5b) extend conically towards one another.

2. Flange unit according to Claim 1, in which the one wall (5a) of the respective depression (5) is arranged nearer to the centre of the flange (1) than the other wall (5b).

3. Flange unit according to Claim 1 or 2, in which the part region (4) is arranged centrally in the bracket (3).

4. Flange unit according to one of Claims 1 to 3, in which the at least one depression is configured as a slot (5).

## Revendications

1. Unité d'accouplement à bride se composant d'une bride (1) et d'un joint (2), dans laquelle la bride (1) comporte, sur son côté raccordement tourné vers le joint (2) au moins un évidement (5) dont l'axe longitudinal est parallèle à l'axe longitudinal de la bride (1) et dans laquelle le joint (2) comporte au moins une languette (3) pliée à angle droit parallèlement à l'axe longitudinal de la bride (1) et qui s'engage dans l'évidement (5) et s'applique, sur un côté, sur l'une des parois (5a) de cet évidement (5), la languette (3) ayant une partie (4), qui est incurvée dans la direction de l'autre paroi (5b) faisant face à l'une des parois (5a) et qui s'applique sur l'autre paroi (5b) sous l'effet d'une force de flexion, **caractérisée par le fait que** l'une des parois (5a) et l'autre paroi (5b) sont coniques l'une par rapport à l'autre.

2. Unité d'accouplement à bride selon la revendication 1, dans laquelle l'une des parois (5a) de l'évidement respectif (5) est plus proche du milieu de la bride (1) que l'autre paroi (5b).

3. Unité d'accouplement à bride selon la revendication 1 ou la revendication 2, dans laquelle la partie (4) est disposée au milieu de la languette (3).

4. Unité d'accouplement à bride selon l'une des revendications 1 à 3 dans laquelle le au moins un évidement est conçu comme trou longitudinal.
